# DEMANDE DE BREVET EUROPEEN

(11) **EP 2 811 208 A1**
(43) Date de publication de la demande: **10.12.2014**
(21) Numéro de dépôt: 13170249.0
(22) Date de dépôt: 03.06.2013
(51) Int. Cl.: F16K 5/06, F16K 5/20

(54) **Robinet d'isolement et de régulation**

(71) Demandeur: Darco, 64160 Morlaas (FR)
(72) Inventeur: David, Patrick, 64160 Morlaás (FR)
(74) Mandataire: Fragnaud, Aude

(57) **Abrégé**

L'invention porte sur un robinet d'isolement comprenant au moins un embout de raccordement (10a, 10b) pourvu d'un canal (11) d'écoulement de fluide destiné à être obturé par un tournant sphérique (40), ledit tournant sphérique comprenant une surface externe (44) sphérique et un trou cylindrique (41) central et étant apte à être actionné entre une position d'ouverture, dans laquelle ledit trou cylindrique (41) est positionné de manière coaxiale audit canal (11) d'écoulement, et une position de fermeture, dans laquelle ladite surface externe (44) du tournant sphérique obture ledit canal (11) d'écoulement. Le tournant sphérique est en outre équipé de sièges amont (100a) et aval (100b) comprenant chacun une partie cylindrique avant (101 a, 101b) associée à des moyens de rappel élastiques (150a) de façon à ce qu'une face d'extrémité avant de ladite partie cylindrique avant (101 a, 101 b), comprenant une portion sensiblement tronconique (110a, 110b), vienne en appui contre ladite surface externe (44) dudit tournant sphérique (40). La portion sensiblement tronconique (110a, 110b) de ladite face d'extrémité avant de ladite partie cylindrique avant (101 a, 101 b), présente un relief formant deux zones (Za, Ze) de contact métal-métal, l'une (Za) permettant d'assurer un appui sur la surface externe (44) du tournant sphérique (40), tandis que l'autre (Ze), formée grâce à une excroissance (106a) flexible plaquée contre la surface externe (44) du tournant sphérique (40), permet d'assurer une étanchéité fiable dans le temps et adapté à tous les fluides, même chargés en particules solides(sable, grattons de soudure etc) ainsi que pour assurer des fonctions de vannes de sécurité.

## Description

L'invention concerne le domaine des robinets d'isolement et de régulation, encore dénommés vannes à obturateur sphérique.

Les robinets d'isolement sont principalement destinés à l'industrie pétrolière, gazière et chimique pour ses besoins d'exploitation.

### [Etat de la technique]

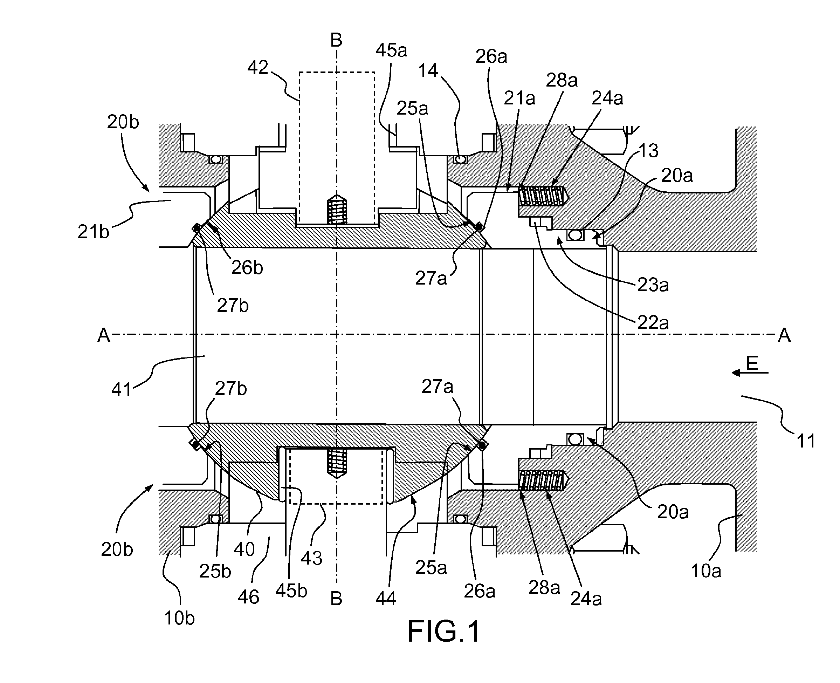

Un tel robinet d'isolement est représenté schématiquement sur la vue en coupe de la Figure 1. Il comprend en général au moins un embout de raccordement 10a, destiné à être connecté par exemple à une canalisation d'extraction de pétrole ou de gaz. Cet embout de raccordement10a comprend un canal 11 d'écoulement de fluide s'étendant suivant l'axe longitudinal A-A du robinet. L'écoulement du fluide dans le canal 11 peut se faire dans un sens ou dans l'autre (bidirectionnel). Pour simplifier la compréhension on a choisi un sens de circulation indiqué par le sens de la flèche référencée E sur la Figure 1. Un tournant sphérique 40 est monté dans le corps 46, autour d'un axe B-B, perpendiculaire à l'axe A-A d'écoulement de fluide, formé par un arbre supérieur 42 et un arbre inférieur 43, montés dans des paliers auto-lubrifiés 45a, 45b. Le canal d'écoulement 11 est destiné à être obturé par le tournant sphérique 40 lorsqu'il est actionné en rotation autour de l'arbre 42, 43 sur lequel est fixé un système d'actionnement (non représenté). Le tournant sphérique 40 comprend une surface externe 44 sphérique et un trou 41 cylindrique débouchant apte à être positionné de manière coaxiale audit canal 11 d'écoulement de fluide lorsque le tournant sphérique 40 est en position d'ouverture. Lorsque le tournant sphérique 40 est en position de fermeture, c'est-à-dire lorsqu'il est tourné d'un quart de tour autour de l'arbre 42, 43 de rotation, sa surface externe sphérique 44 obture le canal 11 d'écoulement de fluide.

En général, le robinet est conçu de manière totalement symétrique et comprend un deuxième embout de raccordement 10b (dont une partie est représentée sur la Figure 1) en aval du tournant sphérique 40.

Un logement est prévu, dans chaque embout de raccordement 10a, 10b pour y loger, de part et d'autre du tournant sphérique 40, respectivement un siège amont 20a et un siège aval 20b constitués par des couronnes annulaires métalliques. Le logement est réalisé par usinage de manière à ce que le siège puisse se déplacer légèrement par rapport à l'embout de raccordement 10a, 10b, parallèlement à l'axe longitudinal A-A du robinet, sous l'effet de poussées dues à la pression du fluide, et à l'action d'un moyen de rappel élastique 24a, 24b, et à l'action de ces deux causes conjuguées.

Chaque siège 20a, 20b, comprend une première partie cylindrique avant 21a, c'est-à-dire située en regard du tournant sphérique 40, une deuxième partie cylindrique 23a située en arrière de la première partie, tournée vers le côté opposé au tournant sphérique, et de diamètre inférieur à celui de la première partie cylindrique. La première partie cylindrique avant 21a, 21b comprend une première face d'extrémité 28a, dite arrière par rapport au tournant sphérique, soumise aux forces de rappel de moyens élastiques 24a, 24b, de type ressorts par exemple. Ces forces de rappel permettent d'agir sur une deuxième face d'extrémité, dite avant par rapport au tournant sphérique, de la première partie cylindrique avant 21a, 21b, dont une portion présente une surface 25a, 25b sensiblement tronconique, afin que cette-dernière vienne en appui contre la surface externe du tournant sphérique. La surface tronconique est en outre pourvue d'une gorge annulaire 26a, 26b dans laquelle est disposé un joint d'étanchéité 27a, 27b annulaire. Ce joint est souple et peut par exemple être réalisé dans une matière thermoplastique de type PTFE (PolyTétraFluoroEthylène), nylon (Marque déposée) ou PEEK (polyétheréthercétone) par exemple ou autre.

D'autres joints toriques 13, 14 assurant également une étanchéité en cas de fuite sont disposés respectivement entre le siège 20a, 20b et l'embout de raccordement 10a, 10b ou entre l'embout de raccordement 10a, 10b et des moyens de fixation de l'arbre d'entrainement 42, 43 du tournant sphérique 40 sur l'embout de raccordement. Ces joints, bien qu'assurant eux aussi une certaine étanchéité en cas de fuite, sont moins cruciaux que le joint 27a, 27b prévu entre le siège 20a, 20b et le tournant sphérique 40. Ce joint 27a, 27b doit en effet assurer une étanchéité parfaite en toute circonstance et quelle que soit la pression exercée par le fluide à l'intérieur du canal 11, afin d'éviter toute fuite de fluide qui pourrait alors avoir de graves conséquences.

Ce joint d'étanchéité 27a, 27b, disposé entre le siège et le tournant sphérique, présente cependant des inconvénients. Il est en effet réalisé dans un matériau sujet aux vieillissements, si bien qu'il n'assure plus aussi bien ses fonctions d'étanchéité au bout d'un certain temps. De plus, le vieillissement du joint est d'autant plus rapide qu'il est très régulièrement sollicité, aussi bien lors des actionnements répétés du tournant sphérique que sous la pression du fluide ou la présence de particules solides dans le fluide. Le joint s'use donc rapidement et fini par ne plus remplir sa fonction d'étanchéité.

L'invention a donc pour but de palier à au moins un des inconvénients de l'art antérieur. L'invention vise notamment à améliorer l'étanchéité des robinets d'isolement pour que ceux-ci puissent supporter de fortes pressions sans apparition de fuite. L'invention vise en outre à réaliser un robinet d'isolement sans joint d'étanchéité intermédiaire entre le siège et le tournant sphérique, afin d'obtenir une étanchéité métal-métal qui soit constante et fiable dans le temps et adapté à tous les fluides, même chargés en particules solides (sable, grattons de soudure etc) ainsi que pour assurer des fonctions de vannes de sécurité.

### [Brève description de l'invention]

A cet effet, l'invention a pour objet un robinet d'isolement comprenant au moins un embout de raccordement pourvu d'un canal d'écoulement de fluide destiné à être obturé par un tournant sphérique, ledit tournant sphérique comprenant une surface externe sphérique et un trou cylindrique central et étant apte à être actionné entre une position d'ouverture, dans laquelle ledit trou cylindrique est positionné de manière coaxiale audit canal d'écoulement, et une position de fermeture, dans laquelle ladite surface externe du tournant sphérique obture ledit canal d'écoulement, ledit tournant sphérique étant en outre équipé de sièges amont et aval disposés dans un logement dudit au moins un embout de raccordement et comprenant chacun une partie cylindrique avant associée à des moyens de rappel élastiques de façon à ce qu'une face d'extrémité avant de ladite partie cylindrique avant, comprenant une portion sensiblement tronconique, vienne en appui contre ladite surface externe dudit tournant sphérique. Ce robinet est principalement **caractérisé en ce que** la portion sensiblement tronconique de ladite face d'extrémité avant de ladite partie cylindrique avant, est pourvue d'une gorge annulaire séparant ladite portion sensiblement tronconique en deux zones de contact, une première zone de contact externe étant apte à assurer un appui sur ladite surface externe dudit tournant sphérique et une deuxième zone de contact interne, formée par une excroissance s'étendant vers ledit canal d'écoulement, étant apte à assurer une étanchéité entre ledit siège et ladite surface externe dudit tournant sphérique.

Ainsi, toute la surface de la portion sensiblement tronconique du siège, en vis-à-vis du tournant sphérique, ne se trouve pas en contact avec la surface externe du tournant sphérique. Elle présente un relief approprié pour créer deux zones de contact métal-métal, l'une permettant d'assurer un appui sur la surface externe du tournant sphérique, tandis que l'autre, formée grâce à une excroissance flexible plaquée contre la surface externe du tournant sphérique, permet d'assurer une véritable étanchéité. L'étanchéité étant assurée par un contact direct métal-métal, aucun joint intermédiaire susceptible de se détériorer n'est utilisé, si bien que l'étanchéité obtenue est fiable et constante dans le temps.

Selon d'autres caractéristiques optionnelles du robinet :
- une surface interne de ladite partie cylindrique avant dudit siège comprend une deuxième gorge annulaire située en regard de ladite première gorge,
- la deuxième gorge est une double gorge comprenant deux portions respectivement avant et arrière, ladite portion arrière présentant un diamètre supérieur à celui de ladite portion avant,
- une face d'extrémité arrière de la partie cylindrique avant comprend, sur une surface externe, une troisième gorge annulaire, apte à rendre ladite partie cylindrique avant flexible autour d'un axe de rotation perpendiculaire à l'axe longitudinal,
- ladite troisième gorge annulaire est située sensiblement en regard de la portion arrière de la double gorge,
- lesdits moyens de rappel élastiques sont disposés sur un bord externe de la face d'extrémité arrière de ladite partie cylindrique avant,
- la longueur de chaque zone de contact est de 1 à 5 mm pour des diamètres du tournant sphérique allant de 2 pouces à 56 pouces et pour une pression exercée par le fluide contre les parois internes du siège allant de 20 à 420 bar.
- les zones de contact (Za , Ze) sont des zones de contact métal-métal.
- Les surfaces en contact devant assurer l'étanchéité métal-métal sont revêtues d'une matière présentant une dureté élevée comme du carbure de tungstène, stellite, etc.
- les excroissances présentent une forme arrondie.

D'autres particularités et avantages de l'invention apparaitront à la lecture de la description suivante faite à titre d'exemple illustratif et non limitatif, en référence aux Figures annexées qui représentent :
- La Figure 1, déjà décrite, une vue en coupe d'un robinet d'isolement selon l'art antérieur,
- La Figure 2, une vue en coupe d'un robinet d'isolement selon l'invention,
- La Figure 3, une vue de détail illustrant la structure du siège amont du tournant sphérique en position d'ouverture, selon un premier mode de réalisation,
- La Figure 4, une vue de détail illustrant la structure du siège amont du tournant sphérique en position d'ouverture, selon un deuxième mode de réalisation,
- La Figure 5, une vue de détail illustrant la structure du siège amont du tournant sphérique en position de fermeture, selon le deuxième mode de réalisation.

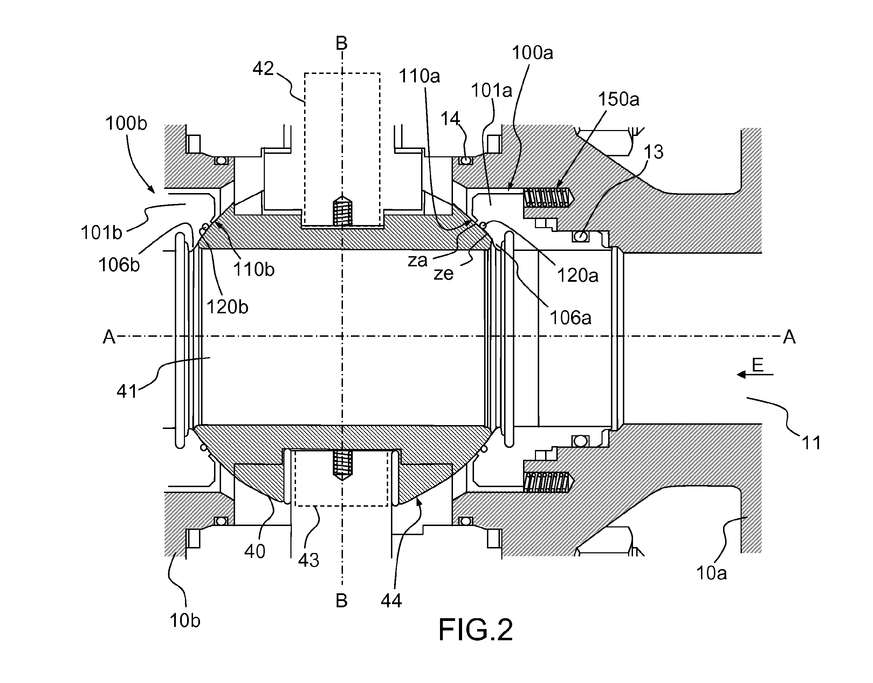

Les termes « amont » et « aval » tels qu'utilisés sont définis par rapport au sens d'écoulement du fluide dans le canal d'écoulement, lequel est indiqué par une flèche référencée E sur la Figure 2.

Les termes « externe » et « interne » tels qu'utilisés sont définis par rapport au canal 11 d'écoulement de fluide.

Les termes « avant » et « arrière » tels qu'utilisés sont définis par rapport au tournant sphérique 40, une surface avant étant tournée vers le tournant sphérique alors qu'une surface arrière est tournée vers le côté opposé au tournant sphérique.

Le terme « longueur » des zones Za et Ze tel qu'utilisé s'entend par la longueur sur les vues en coupe des vis-à-vis desdites zones avec la surface externe du tournant sphérique.

La Figure 2 représente un schéma vu en coupe d'un robinet d'isolement selon l'invention. Les mêmes références que sur la Figure 1 sont utilisées pour désigner les éléments communs.

### [Description détaillée de l'invention]

Ce robinet comprend avantageusement un siège amont 100a, et un siège aval 100b symétrique, qui présente une géométrie particulière lui permettant d'assurer un parfait contact métal-métal directement avec la surface externe 44 du tournant sphérique 40 et d'assurer une parfaite étanchéité sans joint d'étanchéité intermédiaire. Le siège 100a, 100b présente notamment une première partie cylindrique avant 101a, 101b, dont la portion sensiblement tronconique 110a, 110b, de la face d'extrémité avant, présente un relief qui engendre la création de deux zones de contact Za, Ze métal-métal sans joint intermédiaire. Plus particulièrement, cette portion sensiblement tronconique 110a, 110b de la face d'extrémité avant est pourvue d'une gorge annulaire 120a, 120b. Cette gorge annulaire sépare avantageusement la portion sensiblement tronconique en deux zones de contact Za et Ze. La première zone de contact Za, située vers l'extérieur du canal 11 d'écoulement, permet d'assurer un appui du siège 100a, 100b sur la surface externe 44 du tournant sphérique 40. La deuxième zone de contact Ze, s'étend vers l'intérieur du canal 11 d'écoulement grâce à la présence d'une excroissance 106a, 106b. Cette excroissance 106a, 106b est suffisamment souple pour qu'elle puisse être facilement plaquée contre la surface externe 44 du tournant sphérique 40 sous l'action d'une pression exercée par le fluide véhiculé dans le canal 11 d'écoulement. De cette manière, l'excroissance 106 assure une étanchéité entre ledit siège 100a, 100b et le tournant sphérique 40.

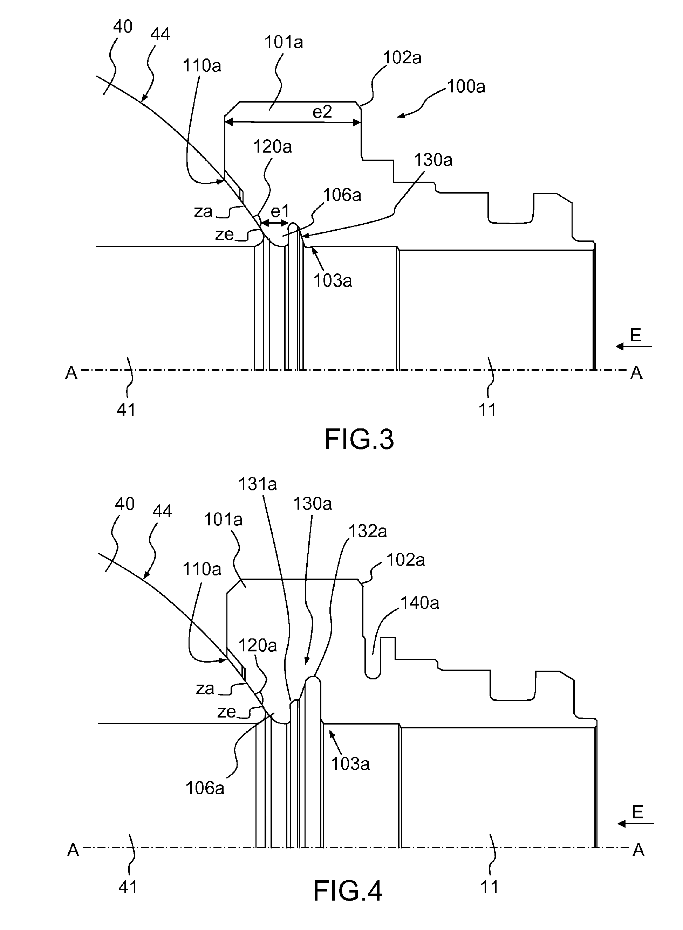

Les sièges amont 100a et aval 100b étant symétriques, la Figure 3 illustre, de manière très schématique un détail de la structure du siège amont 100a, selon un premier mode de réalisation, et du tournant sphérique 40 en position d'ouverture.

Sur ce schéma de la figure 3, certains éléments non fonctionnels ont été retirés afin de faciliter la compréhension. C'est ainsi que les joints toriques 13, 14 des Figures 1 et 2 ont été retirés. Selon ce premier mode de réalisation, le siège 100a comprend une première partie cylindrique 101a située à l'avant du siège et comprenant une face d'extrémité avant dont la portion sensiblement tronconique 110a comprend une gorge 120a séparant la première zone de contact Za assurant l'appui du siège sur la face externe 44 du tournant sphérique 40, de la deuxième zone de contact Ze assurant l'étanchéité. Cette deuxième zone de contact Ze s'étend avantageusement vers l'intérieur du canal. Elle est formée grâce à une excroissance 106a d'épaisseur e1 réduite par rapport à celle e2 de la partie cylindrique avant 101a, de sorte qu'elle présente une grande flexibilité par rapport à la partie cylindrique avant rigide. Cette excroissance 106a étant flexible, elle permet de se coller contre la paroi externe 44 du tournant sphérique 40 sous l'effet de la pression exercée par le fluide véhiculé dans le canal 11 d'écoulement. De plus, les moyens de rappel élastiques 150, de type ressort, disposés sur l'extrémité externe de la face arrière 102a de la partie cylindrique avant, exercent également une pression sur la partie cylindrique avant tendant à plaquer la première zone de contact Za contre la surface externe 44 du tournant sphérique 40 afin d'assurer un appui.

De manière avantageuse, la surface interne 103a de ladite partie cylindrique avant 101a dudit siège 100a comprend une deuxième gorge annulaire 130a située sensiblement en regard de la première gorge 120a de la portion sensiblement tronconique 110a. Le fluide véhiculé dans le canal d'écoulement, en pénétrant dans cette deuxième gorge 130a, exerce une pression qui tend à plaquer la zone l'excroissance 106a contre la surface externe 44 du tournant sphérique 40 et à rallonger ainsi la longueur de la zone d'étanchéité Ze.

La géométrie particulière en forme de bec de l'excroissance 106, obtenue par la création des deux gorges annulaire 120a, 130a sensiblement en regard l'une de l'autre, pratiquées respectivement dans les surfaces tronconique avant 110a et interne 103a de la partie cylindrique avant 101a, permet d'avoir une portion métallique 106a du siège 100a qui est très flexible et qui vient se plaquer très facilement sous l'effet de la pression exercée par le fluide contre les parois internes du canal et de la deuxième gorge 130a ainsi créée.

De la même manière que pour la Figure 3, la Figure 4 schématise un détail de la structure du siège amont 100a avec tournant sphérique en position ouverte, selon un autre mode préféré de réalisation, et du tournant sphérique 40 en position d'ouverture. Selon ce mode de réalisation, la deuxième gorge 130a est une double gorge comprenant une portion avant 131a et une portion arrière 132a. La portion arrière 132a présente un diamètre supérieur à celui de la portion avant 131a, de sorte que la double gorge forme un espace en escalier dans la paroi interne 103a de la partie cylindrique avant 101a.

Une troisième gorge 140a est en outre pratiquée sur la surface externe de la face d'extrémité arrière 102a de la partie cylindrique avant 101a, de sorte que cette troisième gorge 140a est disposée en regard de la portion arrière 132a de la double gorge 130a. Cette troisième gorge 140a permet de rendre la partie cylindrique avant 101a du siège 100a plus flexible selon le sens longitudinal A-A et d'absorber ainsi les pressions exercées par le fluide contre la paroi interne 103a de la partie cylindrique avant 101a. Une telle troisième gorge 140a peut également être pratiquée dans le cas du deuxième mode de réalisation illustré par la figure 3 afin d'assurer la même fonction.

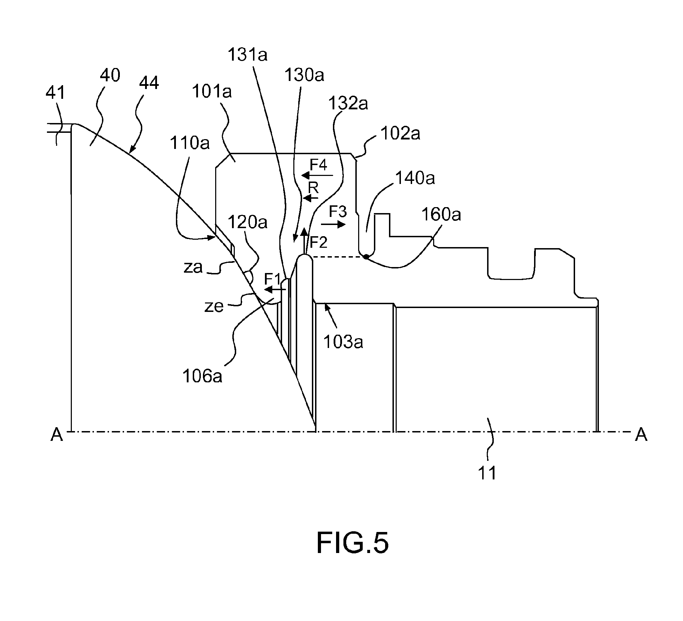

Le fonctionnement de ce siège 100a est décrit en référence à la Figure 5 qui schématise ce même détail de la structure du siège amont 100a lorsque le tournant sphérique 40 est en position de fermeture. En position de fermeture, la pression exercée par le fluide sur la surface externe 44 du tournant sphérique 40 est très forte et tend à la déformer. La pression exercée par le fluide sur les parois internes du siège est également très forte.

L'excroissance 106a présente une flexibilité du fait de sa faible épaisseur e1 comparativement à l'épaisseur e2 de la première partie cylindrique avant 101a. La pression exercée par le fluide pénétrant dans la portion avant 131a de la deuxième gorge 130a engendre une force F1, orientée suivant l'axe longitudinal A-A, tendant à plaquer l'excroissance 106a flexible contre la surface externe 44 du tournant sphérique 40, et permet ainsi de rallonger la deuxième zone de contact Ze et de renforcer encore plus l'étanchéité entre le siège 100a et le tournant sphérique 40.

La pression exercée par le fluide dans la portion arrière 132a de la deuxième gorge 130a engendre une force F2 perpendiculaire à l'axe longitudinal A-A et tendant à pousser la partie cylindrique 101a avant du siège vers l'extérieur. La présence de la troisième gorge 140a permet de rendre la partie cylindrique avant 101a du siège plus flexible et permet donc de translater cette force F2 en une force F3 parallèle à l'axe longitudinal A-A et tendant à déplacer la partie cylindrique avant 101a vers l'arrière. Dans ce cas, la partie cylindrique avant 101a pivote vers l'arrière autour d'un axe de rotation 160a perpendiculaire à l'axe longitudinal A-A du robinet. La première zone de contact Za assure alors un moins bon appui, mais la deuxième zone de contact Ze appuie encore plus sur la surface externe 44 du tournant sphérique si bien que sa longueur est rallongée et son étanchéité est alors d'autant plus renforcée. Pour que la zone de contact Za soit toujours en appui même en cas de très forte pression, le moyen élastique de rappel 150a, matérialisé par un ressort sur le schéma de la Figure 2, est avantageusement disposé sur le bord externe de la face d'extrémité arrière 102a de la partie cylindrique avant 101a, c'est-à-dire sur un bord le plus éloigné possible de l'axe de rotation 160a de la partie cylindrique avant 101a, de sorte que la force F4 qu'il engendre est supérieure à la force F3 engendré par la pression exercée par le fluide. Par conséquent, la force résultante R exercée sur la partie cylindrique avant 101a tend à pousser la face d'extrémité avant vers le tournant sphérique 40 et à appliquer la première zone de contact Za contre la surface externe 44 du tournant sphérique 40 pour assurer un appui.

Le siège aval 100b, disposé en aval du tournant sphérique 40, est totalement symétrique au siège amont 100a. Lorsque le tournant sphérique 40 est fermé, la surpression du fluide est essentiellement exercée sur le siège amont. Lorsque le tournant sphérique 40 est en position d'ouverture, la circulation du fluide dans le canal 11 et le trou cylindrique 41 coaxial du tournant sphérique, engendre les mêmes pressions tout le long du canal et donc sur les sièges amont 101a et aval 101b. Le fluide pénètre dans tous les interstices, c'est-à-dire dans les gorges 130a, 130b internes au canal 11 d'écoulement. Les pressions exercées par le fluide à l'intérieur de ces gorges 130a, 130b sont totalement symétriques et engendrent des forces qui sont exercées sur les excroissances 106a, 106b de manière totalement symétrique. Ainsi l'excroissance 106b du siège aval 100b est plaquée contre la surface externe 44 du tournant sphérique 40 sous la pression du fluide circulant dans le canal, de sorte que la zone de contact métal-métal Ze créée grâce à l'excroissance 160b du siège aval 100b permet elle aussi d'assurer une étanchéité entre le siège aval 100b et le tournant sphérique 40.

Les diamètres extérieurs des tournants sphériques utilisés pour l'exploitation pétrolière ou gazière varient actuellement entre 20mm et 1800mm. Les longueurs des première et deuxième zones de contact métal- métal Za et Ze varient donc en fonction du diamètre du tournant sphérique 40 utilisé, mais aussi de la pression qui est exercée par le fluide sur le siège. A titre d'exemple, les longueurs de ces zones de contact Za, Ze sont de 1 mm à 5mm pour des diamètres du tournant sphérique 40 allant de 2 pouces à 56 pouces et pour une pression exercée par le fluide contre les parois internes 103a, 106a du siège 100a allant de 20 à 420 bar.

Les surfaces en contact devant assurer l'étanchéité dite métal-métal sont revêtues d'une matière présentant une dureté élevée, typiquement supérieure à 6 Mohs, comme par exemple du carbure de tungstène, stellite, etc. Ce revêtement est réalisé par projection, de manière conventionnelle.

Les excroissances 106a et 106b présentent une forme arrondie permettant de faciliter le glissement du siège et éviter le grippage en présence de particules solides (sable, grattons de soudure).

Le robinet qui vient d'être décrit permet d'assurer une très bonne étanchéité entre le siège et le tournant sphérique, grâce à un contact métal-métal. L'étanchéité obtenue est constante et fiable dans le temps car elle ne nécessite pas l'utilisation d'un joint intermédiaire susceptible de se dégrader dans le temps.

Le robinet permet d'assurer des fonctions de vannes de sécurité et une étanchéité constante et fiable dans le temps adapté à tous les fluides, même chargés en particules solides (sable, grattons de soudure etc).

## Revendications

1. Robinet d'isolement comprenant au moins un embout de raccordement (10a, 10b) pourvu d'un canal (11) d'écoulement de fluide destiné à être obturé par un tournant sphérique (40), ledit tournant sphérique comprenant une surface externe (44) sphérique et un trou cylindrique (41) central et étant apte à être actionné entre une position d'ouverture, dans laquelle ledit trou cylindrique (41) est positionné de manière coaxiale audit canal (11) d'écoulement, et une position de fermeture, dans laquelle ladite surface externe (44) du tournant sphérique obture ledit canal (11) d'écoulement, ledit tournant sphérique étant en outre équipé de sièges amont (100a) et aval (100b) disposés dans un logement dudit au moins un embout de raccordement (10a, 10b) et comprenant chacun une partie cylindrique avant (101a, 101b) associée à des moyens de rappel élastiques (150a) de façon à ce qu'une face d'extrémité avant de ladite partie cylindrique avant (101a, 101b), comprenant une portion sensiblement tronconique (110a, 110b), vienne en appui contre ladite surface externe (44) dudit tournant sphérique (40), **caractérisé en ce que** la portion sensiblement tronconique (110a, 110b) de ladite face d'extrémité avant de ladite partie cylindrique avant (101a, 101b), est pourvue d'une gorge annulaire (120a, 120b) séparant ladite portion sensiblement tronconique en deux zones de contact (Za, Ze), une première zone de contact (Za) externe étant apte à assurer un appui sur ladite surface externe (44) dudit tournant sphérique (40) et une deuxième zone de contact (Ze) interne, formée par une excroissance (106a, 106b) s'étendant vers ledit canal (11) d'écoulement, étant apte à assurer une étanchéité entre ledit siège (100a, 100b) et ladite surface externe (44) dudit tournant sphérique (40).

2. Robinet selon la revendication 1, **caractérisé en ce qu'**une surface interne (103a) de ladite partie cylindrique avant (101a) dudit siège (100a) comprend une deuxième gorge annulaire (130a) située en regard de ladite première gorge (120a).

3. Robinet selon la revendication 2, **caractérisé en ce que** la deuxième gorge (130a) est une double gorge comprenant deux portions respectivement avant (131a) et arrière (132a), ladite portion arrière (132a) présentant un diamètre supérieur à celui de ladite portion avant (131a).

4. Robinet selon l'une des revendications 1 à 3, **caractérisé en ce qu'**une face d'extrémité arrière (102a) de la partie cylindrique avant (101a, 101b) comprend, sur une surface externe, une troisième gorge (140a) annulaire, apte à rendre ladite partie cylindrique avant (101a, 101b) flexible autour d'un axe de rotation (160a) perpendiculaire à l'axe longitudinal (A-A).

5. Robinet selon les revendications 3 et 4, **caractérisé en ce que** ladite troisième gorge annulaire (140a) est située sensiblement en regard de la portion arrière (132a) de la double gorge (130a).

6. Robinet selon l'une des revendications 1 à 5, **caractérisé en ce que** lesdits moyens de rappel élastiques (150a) sont disposés sur un bord externe de la face d'extrémité arrière (120a) de ladite partie cylindrique avant (101a, 101b).

7. Robinet selon l'une des revendications 1 à 7, **caractérisé en ce que** la longueur de chaque zone de contact (Za , Ze) est comprise entre 1 et 5 mm pour des diamètres du tournant sphérique (40) allant de 2 pouces à 56 pouces et pour une pression exercée par le fluide contre les parois internes (103a, 106a) du siège (100a) allant de 20 à 420 bar.

8. Robinet selon l'une des revendications 1 à 8, **caractérisé en ce que** les zones de contact (Za , Ze) sont des zones de contact métal-métal.

9. Robinet selon la revendication 8, **caractérisé en ce que** les surfaces en contact devant assurer l'étanchéité métal-métal sont revêtues d'une matière présentant une dureté élevée, comme du carbure de tungstène, stellite.

10. Robinet selon la revendication 1, caractérisé l'excroissance (106a, 106b) s'étendant vers le canal (11) d'écoulement présente une forme arrondie.
